# EUROPÄISCHE PATENTSCHRIFT

(11) **EP 1 641 548 B1**
(45) Veröffentlichungstag und Bekanntmachung des Hinweises auf die Patenterteilung: **30.08.2017**
(21) Anmeldenummer: 04763135.3
(22) Anmeldetag: 08.07.2004
(51) Int. Cl.: B01D 39/20, B01D 71/02, B32B 18/00, C04B 38/00, C04B 35/573

(54) **PORÖSER KERAMIKKÖRPER UND ZUGEHÖRIGES HERSTELLUNGSVERFAHREN**
POROUS CERAMIC BODY AND METHOD FOR PRODUCTION THEREOF
CORPS EN CERAMIQUE POREUX ET PROCEDE DE PRODUCTION

(30) Priorität: 09.07.2003 DE 10331049
(43) Veröffentlichungstag der Anmeldung: 05.04.2006
(73) Patentinhaber: Saint-Gobain IndustrieKeramik Rödental GmbH, 96466 Rödental (DE); CoMeTas A/S, 2800 Lyngby (DK)
(72) Erfinder: HACK, Udo, 91336 Heroldsbach (DE); STOBBE, Per, 2840 Holte (DK)
(74) Vertreter: Bockhorni & Kollegen
(86) Internationale Anmeldenummer: PCT/EP2004/007521
(87) Internationale Veröffentlichungsnummer: WO 2005/005016

(56) Entgegenhaltungen:
- WO-A-03/024892
- DE-A- 3 149 796
- GB-A- 790 672
- US-A- 6 126 833
- US-B1- 6 214 078
- KRIEGESMANN J., JODLAUK J.: "Consolidation Behaviour of Extremely Fine Grained Recrystallized Silicon Carbide" KERAM Z., KERAMISCHE ZEITSCHRIFT, Bd. 51, Nr. 8, 1999, Seiten 648-652, XP009037194 FREIBURG
- KRIEGESMANN J., JODLAUK J.: "Characterizing the Consolidation of Bimodally Distributed Fine-Grained Silicon Carbide Powders" CFI CERAM FORUM INT, Bd. 79, Nr. 12, Dezember 2002 (2002-12), Seiten D32, E37-E44, XP009037199

## Beschreibung

Die vorliegende Erfindung betrifft ein Verfahren zur Herstellung eines porösen Keramikkörpers, insbesondere einer Filtermembran sowie einen porösen Keramikkörper und dessen Verwendung in einem Filter, insbesondere in einem sogenannten "Cross-flow Filter".

In verschiedensten technischen Bereichen, wie z.B. im Chemie-Ingenieurwesen, in der Lebensmitteltechnik usw. müssen flüssige Stoffströme (Fluide) gefiltert werden. Je nach Größe der herauszufilternden Stoffe unterscheidet man hierbei Mikrofiltration (MF), Ultrafiltration (UF) und Nanofiltration (NF). Je kleiner die herauszufilternden Stoffe sind, desto höhere Anforderungen werden an die Filtertechnik und die hierbei verwendeten Filtermembranen gestellt.

Für MF-, UF- und NF-Filteranwendungen ist aus dem Stand der Technik die sogenannte "Cross-flow Filtration" bekannte, bei welcher der zu filternde Stoffstrom parallel zur Filteroberfläche fließt. Bei dem druckgetriebenen Trennprozess in der Cross-flow Filtration wird der zu filternde Stoffstrom durch die Filtermembran in zwei Ausgangsströme aufgeteilt, nämlich einen gereinigten Strom, das sogenannte Filtrat oder Permeat und einen zweiten Strom, den sogenannten Rückstandsstrom bzw. Retentat.

Durch die zum Zuführstrom bzw. zur Filtermembran senkrechte Ableitung des Filtrats bzw. Permeats kann man bei der Cross-flow Filtration zwei Geschwindigkeiten unterscheiden, und zwar die Filtratgeschwindigkeit senkrecht zur Filteroberfläche und die Cross-flow Geschwindigkeit parallel zur Filteroberfläche. Bei der Cross-flow Filtration kommt es insbesondere auf die Optimierung des Verhältnisses von Filtratgeschwindigkeit zu Cross-flow Geschwindigkeit an. Die Cross-flow Geschwindigkeit, die ein Mittelwert des Stoffstroms am Eingang und am Ausgang des Filters darstellt, liegt bei bekannten industriellen Anwendungen im Bereich von 1 bis 10 m pro Sekunde, wobei sich hieraus bei 2,5 bar TMP (siehe unten) im Test mit Wasser ein Fluss von ca. 500 bis 2500 Litern pro m² bar und Stunde für MF- und UF-Membranen mit Porengrößen im Bereich von 0,1 bis 1,5µm ergibt. Je nach Anwendung als Filter stellt sich üblicherweise ein Fluss von 50 bis 500 Litern pro m² bar und Stunde ein.

Eine Erhöhung der Cross-flow Geschwindigkeit resultiert im Allgemeinen in einem Anstieg des Flusses aufgrund einer höheren Scherrate. Dies fördert eine effizientere Entfernung der Partikel aus dem Stoffstrom, da sich eine dynamische Schicht an der Membranoberfläche ausbildet. Nachteilig ist hierbei jedoch, dass mit einer erhöhten Cross-flow Geschwindigkeit ein erhöhter Pumpaufwand einhergeht.

Die Filtratgeschwindigkeit ist direkt abhängig von dem über der Filtermembran aufgebrachten Druck, dem sogenannten TMP (Trans-Membran Pressure), wenn eine gegebene Filteroberfläche und ansonsten gleiche Bedingungen angenommen werden. Typischerweise beträgt der TMP 5 bar, doch vereinzelt sind bereits Membranen eingesetzt worden, die bei mehr als 10 bar kontinuierlich gearbeitet haben.

Eine ideale Filtermembran gemäß der Cross-flow Filtration zeigt eine lineare Fluss/Lebenszeit-Kurve bei einem gegebenen Fluid und ansonsten unveränderten Bedingungen.

In speziellen Anwendungen können die beschriebenen Cross-flow Filter durch Schliessen des Filterausgangs auch als so genannte Dead-end Filter eingesetzt werden.

Für den Einsatz als MF- bzw. UF-Membranen in Cross-flow Filtern sind bereits Keramikmembranen bekannt. Diese bestehen typischerweise aus Oxiden der Elemente Aluminium, Silizium, Titan und Zirkon oder Mischungen davon. Die Membranen sind hierbei auf sogenannten Filterträgern angeordnet, die aus den selben Oxiden oder aus weiteren Keramiken, wie z.B. Cordierit und Siliziumkarbid, hergestellt sind.

Die Membranen aus Oxid-Keramik oder sogenannte weiße Membranen werden in einer Vielzahl von Schichten mit immer feiner werdenden Partikelgrößen auf einem Filterträger aufgesintert. Die so hergestellten weißen Keramikmembranen aus Oxidkeramik weisen innerhalb jeder Schicht eine kontinuierliche und breite Korngrößenverteilung von sehr kleinen Partikeln auf im mikro- bzw. sub-mikro- oder nano-Bereich. Damit ergibt sich ebenfalls eine sehr breite Porengrößenverteilung, wobei insbesondere eine Vielzahl von sehr kleinen Poren mit sehr engen Porenkanälen entsteht, die durch den Anteil an Schmelzphase beim Sintern teilweise verschlossen werden, was zu sogenannten Sacklöchern (Dead Ends) führt, und einer guten Filtereigenschaft der Membran entgegensteht. Insbesondere führt dies dazu, dass der Fluss durch derartige Membranen begrenzt ist und deshalb mehr Energie zum Pumpen aufgewendet werden muss, um die oben angegebenen Cross-flow Geschwindigkeiten von 2 bis 8 m pro Sekunde bei 2 bis 5 bar TMP für MF- und UF-Filtration zu erreichen.

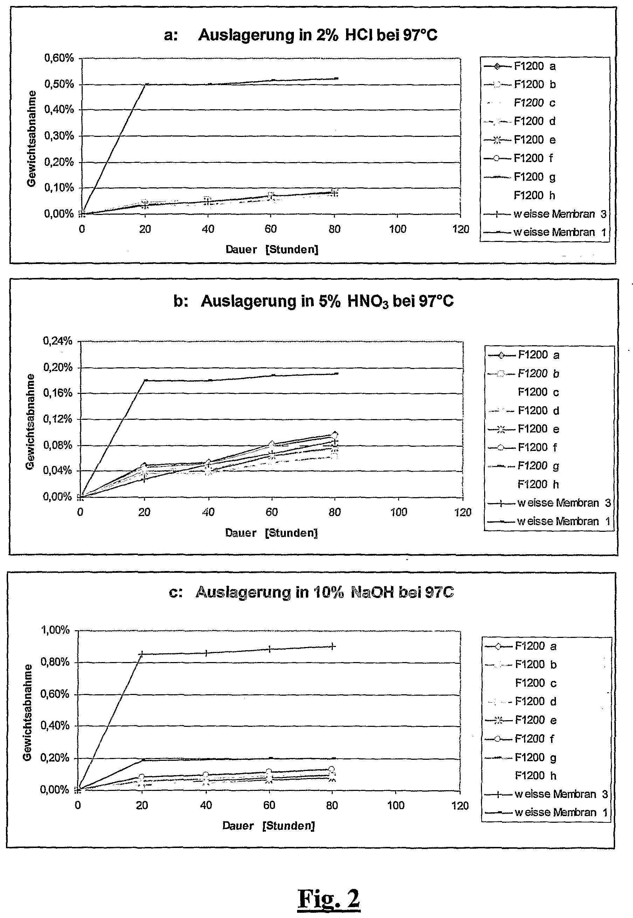

Um diesen Problemen entgegen zu wirken, hat es bereits Bestrebungen gegeben, die sogenannten weißen Membranen aus Oxidkeramik durch sogenannte schwarze Membranen aus nicht-oxidischer Keramik, wie z.B. SiC, zu ersetzen, da es bekannt ist, SiC-Träger für Filtermembranen mit großen Poren, aber enger Porengrößenverteilung, herzustellen (siehe Fig.2, linker und unterer Bereich). Ein Verfahren zur Herstellung einer entsprechenden Filtervorrichtung mit einer SiC-Filtermembran ist in der WO 03/024892 beschrieben. Bei diesem Verfahren werden primäre α-SiC-Partikel mit einer Partikelgröße von 1 - 475 µm, ein Silizium-Spendermaterial, welches keine SiC-Verbindung ist, organische Partikel mit einer Partikelgröße von 1 x 10⁻⁵ bis 20 µm und zumindest ein organischer Binder zu einem Grünkörper geformt, anschließend getrocknet und in einem Ofen unter Schutzatmosphäre pyrolisiert, um den organischen Binder in einen Kohlenstoffbinder umzuwandeln, so dass dieser mit dem schmelzenden Siliziumspender reagiert und feines β-SiC im Nanobereich bildet, welches dann bei sehr hohen Temperaturen zu sehr feinen α-SiC-Körnern im Nanobereich umgewandelt wird, die schließlich an den Korngrenzen der primären α-SiC-Partikel die Verbindung herstellen. Dieses aufgrund der Vielzahl der Ausgangsmaterialien und den hohen Brenntemperaturen sehr aufwändige Verfahren weist zudem die Nachteile auf, dass kaum geeignete Si-Spenderstoffe zur Verfügung stehen, da Silizium bei Korngrößen < 6 µm entzündlich ist und Gehalte von über 100 g pro m³ Luft beim Vermahlen vermieden werden müssen. Darüber hinaus hat sich bereits bei der Herstellung von Filterträgern nach diesem Verfahren gezeigt, dass die während der Porolyse entstandenen Kohlenstoff-Verbindungen bzw. die nano-SiC Körner im für die Rekristallisation von Filterträgeren üblichen Temperaturbereich keine ausreichende Rekristallisation zeigen, so dass durch die verbleibende Feinkörnung im Porenraum die Festigkeit des so gebildeten Keramikkörpers und die Durchströmbarkeit für das Permeat beeinträchtigt ist und keine für den Einsatz brauchbaren Filterträger hergestellt werden können.

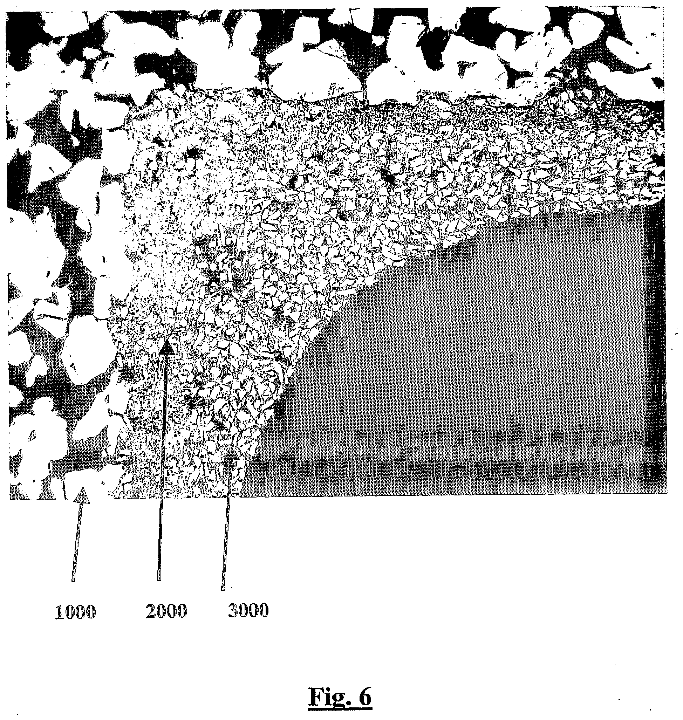

Der angegebene Bereich von 1 bis 475 µm für SiC Primärpartikel ist zudem zur Herstellung von Membranen für die MF- und UF-Filtration viel zu grob. Weiter taugt das beschriebene Verfahren aus metallischem Silizium und Kohlenstoffträgern nicht zur Herstellung von Filtermembranen, weil zur vollständigen Rekristallisation der Rohstoffe nach diesem Verfahren weit höhere Temperaturen nötig sind als sie zur gezielten Einstellung von gleichmässig feinen α-SiC Partikeln für die Membrane notwendig sind und daher ein Riesenkornwachstum in der Membranschicht unvermeidlich ist. Ein Beispiel für Riesenkornwachstum ist in Fig. 6 dargestellt.

Ein weiteres Verfahren zur Herstellung von SiC-Membranen ist in der WO 92/11925 beschrieben. Bei diesem Verfahren werden jedoch sogenannte Bindepartikel eingesetzt, die bei einer Temperatur sintern, die deutlich niedriger ist als die Sintertemperatur der zu verbindenden SiC-Partikel. Dies ist schon daher nicht möglich, weil reines SiC keinen Schmelzpunkt hat, partielles Aufschmelzen der Keramikpartikel aber gerade das kennzeichnende Charakteristikum beim Sintern darstellt. (Zum Sintern von SiC ist die Zugabe von sogenannten Sinterhilfsmitteln, z.B. Al, B, C notwendig, die eine geringe Menge an Schmelzphase erzeugen. Ziel dabei ist stets ein dichtes Material, das nur mittels einer Schwindung in der Grössenordnung um 20% zu realisieren und für Filterzwecke völlig ungeeignet ist)

SiC rekristallisiert dagegen bei entsprechend hohen Temperaturen über Oberflächendiffusion bzw. Gastransport, d.h. energetisch ungünstige, kleine Körner lösen sich auf und das Material wird volumenneutral an energetisch günstigeren Stellen, insbesondere am Kontakt zweier grösserer Körner wieder abgeschieden.

Unter RSiC versteht man allgemein einen rekristallisierten porösen Werksstoff aus 100 % α-SiC in Abgrenzung zu SSiC (gesinterten, meist dichten SiC Werkstoffen mit Sinterhilfsmitteln) und oxid- bzw. nitridgebundenen SiC Werkstoffen oder solchen mit anderen artfremden Bindephasen.

Die Verwendung chemisch unterschiedlicher Bindepartikel nach WO 92/11925 weist jedoch den Nachteil auf, dass die Widerstandsfähigkeit gegen Umwelteinflüsse und Korrosion beeinträchtigt wird, was jedoch für den Einsatz als Filterwerkstoff nachteilig ist. Darüber hinaus treten hier durch die chemische Verschiedenheit von Filterpartikeln und Bindematerial ebenfalls Probleme bei der Bindungsqualität und der Festigkeit des Filterkörpers auf. Außerdem ergeben sich durch den Einsatz unterschiedlicher Materialien auch Schwierigkeiten bei der Herstellung, da durch Verunreinigungen eutektische Schmelzen entstehen können, die ebenfalls für die Ausbildung eines Filterkörpers unerwünscht sind. Ferner liegen auch bei diesem Verfahren durch das Sintern des Bindematerials und das damit verbundene Aufschmelzen dieses Materials im Filterkörper Glasphasen vor, die zu einem Verschließen der Porenkanäle und zur Bildung von toten Bereichen im Filterkörper führen, was für die Filterleistung negativ ist.

Siliziumcarbid (SiC) und Borcarbid (B₄C) sind im Stand der Technik bekannte Werkstoffe mit hoher Temperaturbelastbarkeit. US 790,672 A beschreibt die Herstellung von Siliziumcarbid durch Sintern bei Temperaturen zwischen 2100 °C und 2450 °C. In DE 31 49 96 A1 ist ein Verfahren zur Herstellung von porösen Formkörpern aus polykristallinem Borcarbid unter Verwendung von Borcarbidpulver mit bimodaler Kornverteilung aus einem Grobkorn- und einem Feinkornanteil beschrieben. Für Siliziumcarbid wurde im Stand der Technik bereits die Herstellung durch Sintern aus feinteiligem, bimodalem SiC vorgeschlagen, beispielsweise in dem Artikel Kriegesmann J., Jodlauk J.: "Characterizing the Consolidation of Bimodally Distributed Fine-Grained Silicon Carbide Powders" CFI CERAM FORUM INT, Bd. 79, Nr. 12 Dezember 2002 (2002-12), Seiten D32, E37-E44.

In den Schriften aus dem Stand der Technik werden Filtermembranen aus SiC offenbar nur als Möglichkeiten im Rahmen einer allgemeinen Aufzählung mit erwähnt; die Wesentlichen Parameter, auf die es hier insbesondere ankommt wie Korngrößenverteilung des Primärkorns, Temperaturführung beim Rekristallisieren und die sich dabei ergebenden Filterleistungen werden dagegen nicht offenbart.

Es ist deshalb Aufgabe der vorliegenden Erfindung, einen porösen Keramikkörper, insbesondere eine Filtermembran aus SiC zum Einsatz bei der Cross-flow Filtration zu schaffen, der eine gute Festigkeit, gute Filtereigenschaften und gute Beständigkeit gegenüber Umgebungseinflüssen aufweist. Darüber hinaus soll ein derartiger poröser Keramikkörper einfach und effizient herzustellen sein und eine lange Lebensdauer bei möglichst hoher Filterleistung aufweisen.
Diese Aufgabe wird gelöst mit einem Verfahren mit den Merkmalen des Anspruchs 1 sowie einem porösen Keramikkörper mit den Merkmalen des Anspruchs 13 sowie einem Filter mit den Merkmalen des Anspruchs 17. Vorteilhafte Ausgestaltungen sind Gegenstand der abhängigen Ansprüche.

Nach Maßgabe der Erfindung wird ein poröser Keramikkörper aus SiC mit einer starken, gleichförmigen und homogen verteilten Porosität mit kontinuierlichen, etwa gleich großen Poren in einem dreidimensionalen Porennetzwerk dadurch geschaffen, dass eine Pulvermischung aus SiC Körnern mit einer bimodalen Korngrößenverteilung hergestellt und in eine gewünschte Form gebracht wird. Wie noch näher ausgeführt wird, kommt es hier im Wesentlichen auf zwei Korngrößenklassen an, wobei die erste Korngrößenklasse vorzugsweise eine definierte Ober- und Unterkorngröße und die zweite Korngrößenklasse vorzugsweise mindestens eine definierte Oberkorngrenze aufweist. Allerdings ist der wesentliche Aspekt, dass zwischen den Korngrößenklassen eine gewisse Mischungslücke vorliegt. Bei einer anschließenden Temperaturauslagerung findet eine Rekristallisation statt, wobei die Körner der zweiten Korngrößenklasse, die vorzugsweise entsprechend klein gewählt worden sind, bei der Rekristallisation zu Gunsten der großen Körner verschwinden und damit eine Bindung der großen Körner erzeugen, wobei zwischen den großen Körnern in einem volumenneutralen Prozess gleichmäßige Poren entstehen. Auf diese Weise entsteht ein sehr homogener poröser Keramikkörper mit einer offenen Porosität ohne Totbereiche, der in idealer Weise für Filterzwecke geeignet ist. Die beiden Korngrößenklassen können vorzugsweise jeweils für sich mit einem sehr engen Korngrößenband gemäß der internationalen Normierung nach DIN ISO 8486-2 für Körnungen bis F1200 (3 µm) und JIS R6001 für Körnungen bis JIS 8000 (1µm) eingesetzt werden. Dies sowie das Mengenverhältnis der großen zu den kleinen Korngrößen bestimmt die mittlere Korngröße der Körner in dem fertigen Keramikkörper sowie die mittlere Porengröße, so dass bei einem engen Korngrößenband eine sehr enge Poren- und Korngrößenverteilung erzielt werden kann. Es ist aber ebenfalls möglich, dass sowohl die große Korngrößenklasse als auch die feinere Körnung, die bei der Rekristallisation vollständig aufgezehrt wird, aus mehreren Kornfraktionen besteht, wobei es insbesondere auf das Größenverhältnis zwischen der feinsten Körnung der großen Korngrößenklasse und der größten Körnung der feinen Korngrößenklasse ankommt. Die feine Körnung kann insbesondere auch eine sogenannter Run-off-the-mill-grade mit einer breiten Kornverteilung aber klar definierter Oberkorngrenze sein. Nach der Rekristallisation bewegen sich sowohl die Korngröße der Körner als auch die Porengröße in einem sehr engen und definierten Bereich. Darüber hinaus wird durch die Rekristallisation erreicht, dass die Körner des fertigen porösen Keramikkörpers eine abgerundete Form aufweisen, was sich ebenfalls positiv auf die Filtereigenschaften und die Lebensdauer einer entsprechenden Filtermembran auswirkt.

Nach dem erfindungsgemäßen Verfahren werden mehrere Schichten von porösen Keramikkörpern nacheinander abgeschieden, so dass ein Gradient der mittleren Korngröße bzw. der Porengröße im Schichtkörper eingestellt werden kann. Auf diese Weise ist es beispielsweise möglich, auf einem grobporösen Substrat, beispielsweise einem Filterträger, eine Membran mit immer kleiner werdenden Porendurchmessern und Korngrößen zu erzeugen.

Mit dem erfindungsgemäßen Verfahren wird eine Nicht-Oxidkeramik, nämlich SiC (α-SiC), für die Herstellung von Filtermembranen verwendet, wobei eine gleichmäßige, durchgehend offene, dreidimensionale Porenstruktur erzeugt wird.

Vorzugsweise werden zur Herstellung des oben näher definierten bimodalen Keramikkörnergemisches zwei Chargen von Keramikpulvern mit einer ersten mittleren großen Korngröße (Grobkorn) und einer zweiten mittleren kleineren Korngrößenklassen (Feinkorn) eingesetzt, die zudem definierte maximale und/oder minimale Korngrößen aufweisen, siehe DIN ISO 8486-2 für Körnungen bis F1200 (3µm) und JIS R6001 für Körnungen bis JIS 8000 (1µm). Noch feinere Pulver mit ähnlich engen Kornbändern sind von verschiedenen Herstellern erhältlich: JIS 9000 (d₅₀ = 0,75 µm), JIS 10000 (d₅₀ = 0,60 µm) oder JIS 20000 (d₅₀ = 0,40 µm). Entsprechend den Normen sind für die Körnungen neben der mittleren Korngröß d₅₀ auch ober (d₃) und untere (d₉₄) Grenzen für die Körngrößen festgelegt. Durch diese oberen und unteren Grenzen für die Körner (Korngrößenklasse) wird insbesondere die entstehende Korngröße im fertigen, porösen Keramikkörper als auch die Porengröße noch definierter in einem engen Bereich gehalten. Auf diese Weise ist es möglich, eine Filtermembran mit einer homogenen, gleichmäßig definiert einstellbaren Poren- sowie Korngröße zu erzeugen.

Vorzugsweise liegt das Größenverhältnis zwischen erstem und zweitem Keramikpulver also zwischen Grobkorn und Feinkorn im Bereich 6:1 bis 2:1, vorzugsweise um 4:1 bis 3:1. Das Verhältnis beschränkt sich für sehr feine erste Körnungen durch die Verfügbarkeit geeigneter zweiter Körnungen auf 2:1. Das Mischungsverhältnis zwischen erster und zweiter Körnung beträgt 6:1 bis 1:1, vorzugsweise 4:1 bis 2:1. Wie bereits oben ausgeführt, kann durch das Größen- und/oder Mischungsverhältnis auch die Veränderung der Korngröße im fertigen Produkt zur Ausgangskorngröße bzw. die Korngröße im Bezug auf die Porengröße eingestellt werden. Vorteilhafte Kombinationen sind jeweils abhängig von der angestrebten Porengrösse und sind so zu wählen, dass sich in der ungebrannten Membrane die höchstmögliche Packungsdichte ergibt. Ein zu kleiner oder zu grosser Feinkornanteil beeinträchtigt die Festigkeit nach der Rekristallisation; entweder weil zu wenig Feinkorn für die Rekristallisation zur Verfügung steht oder weil ein zu hoher Feinkornanteil den direkten Kontakt zwischen ersten grossen SiC Körnern verhindert und zu höheren Porosität mit größeren Poren führt.

Vorzugsweise wird bei dem erfindungsgemäßen Verfahren das Keramikpulvergemisch zu einer Schlämme oder Schlicker verarbeitet und über Nassformgebungsverfahren ein Grünkörper erzeugt, wie z.B. durch Gießen. Der Grünkörper wird nach einem Trocknungsschritt der Rekristallisation unterzogen, wobei die Temperatur und die Dauer der Temperaturbehandlung von den gewählten Korngrößen abhängen. Für die Erzeugung einer dreilagigen Filtermembran kann beispielsweise das Keramikpulver für die erste Schicht eine mittlere Korngrößen für das erste Korn im Bereich von 6,5 bis 23 µm, für die zweite Schicht im Bereich von 1 bis 9 µm und für die dritte Schicht im Bereich von 0,5 bis 2 µm aufweisen, während das Feinkorn entsprechend im Bereich von 0,3 bis 2,0 µm je nach Grobkornfraktion gewählt wird. Je kleiner die Korngrößen der entsprechenden Schicht sind, desto niedriger muss die Temperatur und desto kürzer die Temperaturbehandlung für die Rekristallisation gewählt werden, wobei für die beschriebenen Schichten für die erste Schicht 90 Minuten bei 1950°C für die zweite Schicht 60 Minuten bei 1800°C und für die dritte Schicht 30 Minuten bei 1750°C als Anhaltspunkte dienen können.

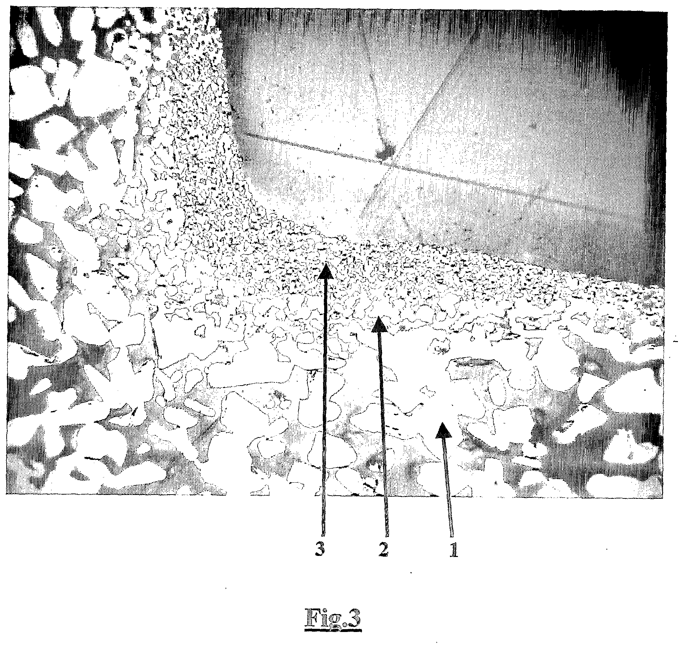

Je nach Größe der verwendeten Keramikkörner, vorzugsweise α-SiC-Körner, ist die genaue Temperatur und Zeitdauer im Einzelfall zu bestimmen, wobei die richtige Temperatur und Dauer dann gewählt ist, wenn im fertigen und porösen Keramikkörper die feinen zweiten Körner vollständig verschwunden sind und noch kein Riesenkornwachstum (Überbrand) stattgefunden hat. Zwischen diesen beiden Grenzen muss dementsprechend die Temperatur und Zeit gewählt werden, so dass sich in den Membranschichten möglichst gerundete Körner ergeben, siehe Fig. 2 und 3.

Mit dem erfindungsgemäßen Verfahren ist es bei richtiger Temperaturführung somit möglich, poröse Keramikkörper bzw. Filter und hier insbesondere Cross-flow Membranfilter bzw. Membranen zu schaffen, die eine homogene Struktur aus nahezu einheitlich großen Poren und Körnern aufweisen, wobei die Poren in einem durchgehend offenen, dreidimensionalen Netzwerk vorliegen und die Keramikkörner durch die Rekristallisation eine im Wesentlichen abgerundete Form aufweisen.

Vorteilhaft ist bei den erfindungsgemäßen Keramikkörpern, dass während der Rekristallisation keine Schmelzphase auftritt und somit der Keramikkörper im Wesentlichen frei von einem Glasgefüge bzw. einer Schmelzphase ist, welche beim Sintern nach dem Stand der Technik durch die angeschmolzenen Körner entsteht. Der erfindungsgemäße Keramikkörper zeichnet sich zudem dadurch aus, dass die Keramikkörner aus Nicht-Oxidkeramik und insbesondere SiC (α-SiC) nicht im amorphen Zustand vorliegen, sondern durch die Rekristallisation im Wesentlichen zu 100 % kristallin sind.

Somit ist es möglich, poröse Keramikkörper mit definierten Poren- und Korngrößen mit einem gleichmäßigen, offenen Porennetz mit einer Porosität von 35% bis 65 %, vorzugsweise um 50% Porosität (abgeschätzt aus den lichtmikroskopischen Bildern) ausschließlich aus α-SiC zu erzeugen, welches als Filtermembran auf einem grobporösen Träger ebenfalls aus SiC aufgebracht ist.

Weitere Vorteile, Kennzeichen und Merkmale der vorliegenden Erfindung werden bei der nachfolgenden detaillierten Beschreibung von Ausführungsbeispielen deutlich. Die beigefügten Diagramme bzw. Fotographien zeigen in
- Fig. 1: ein Diagramm, bei dem der Fluß über dem Druck (TMP) für erfindungsgemäß hergestellte Membranen im Vergleich zu konventionellen Membranen dargestellt ist;
- Fig. 2: a bis c drei Diagramme, die herausragende Chemikalienbeständigkeit von ca. 45 mm langen Filterabschnitten nach Auslagerung in 2% HCl, 5% HNO₃ und 10% NaOH bei 97 °C.
- Fig. 3: einen Anschliff einer zweilagigen SiC-Membran in der Ecke eines quadratischen Kanals eines konventionellen SiC Trägers mit einer mittleren Korngrösse von ca. 9 µm (F600) in der ersten und ca. 3 µm (F1200) in der zweiten Lage bei 240-facher Vergrößerung;
- Fig. 4: einen Anschliff einer ebenfalls zweilagigen SiC-Membran aus der Mitte eines quadratischen Kanals eines SiC Trägers mit der selben ersten Schicht wie in Fig. 2 und ca. 2 µm (JIS6000) in der zweiten Schicht bei 240-facher Vergrößerung ist;
- Fig. 5: eine rasterelektronenmikroskopische Aufnahme einer erfindungsgemäß hergestellten SiC-Membran auf einem SiC-Träger;
- Fig. 6: einen Anschliff einer zweilagigen SiC-Membran mit Unterbrand mit unerwünschten Resten von zweitem Korn in der Struktur und in
- Fig. 7: einem Anschliff einer zweilagigen SiC-Membran mit Überbrand der zweiten Schicht, gekennzeichnet durch unerwünschte grossen Poren und Riesenkornwachstum durch Zusammenwachsen mehrerer SiC Körner.

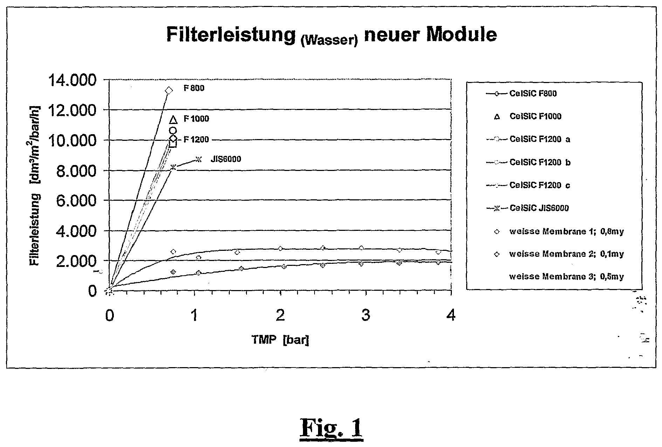

Nach dem erfindungsgemäßen Verfahren wurden RSiC Träger basierend auf dem Grobkorn einer SiC Fraktion F240 nach DIN ISO 8466-2 mit 25 mm Durchmesser und 302 mm Länge durch Extrusion und anschließende Temperaturbehandlung bei hohen Temperaturen hergestellt. Auf diesem RSiC Träger wurde eine erste Membranschicht aus einer Schlämme abgeschieden, die aus 30% SiC-Körnern (75% F600 und 25 % JIS9000), 5 % einer 10%igen Polyvinylalkohol-Lösung als temporärer Binder des Grünkörpers und 65% Wasser besteht. Diese Schicht wurde nach dem Trocknen bei ca. 1950°C für zwei Stunden gebrannt. Auf diese erste Membranschicht, die zur Verringerung der Porengrösse des SiC Trägers dient, wurde eine zweite Membranschicht abgeschieden, und zwar aus unterschiedlichen Korngrößenverteilungen von F800 bis F1200 als Grobkorn mit JIS 9000 als Feinkorn und JIS6000 bis JIS 9000 als Grobkorn und JIS20000 als Feinkorn. Nach dem Trocknen wurden die entsprechenden Module bei 1850°C, 1800°C bzw. 1750°C in Argon für 60 bzw. 30 Minuten ausgebrannt, um ca. 0,2 mm dicke, poröse rekristallisierte Membranen auf SiC-Trägern zu bilden. Mit diesen so hergestellten Filterelementen wurden Cross-flow Filter Versuche durchgeführt, deren Ergebnis im Diagramm der Fig. 1 dargestellt ist. Hier ist zu erkennen, dass die erfindungsgemäßen Filtermembranen beim Test neuer Module mit Wasser bei einem überraschend niedrigen TMP von < 1 bar bereits einen mehrfach größeren Fluß aufweisen als die Vergleichsproben mit verschiedenen weißen Membranen mit unterschiedlichen Porengrößen von 0,1 bis 0,8 µm Durchmesser. Höhere TMP sind auf dem herkömmlichen Teststand nicht möglich wegen der aussergewöhnlich hohen Permeabilität der neuen Filtermodule. In einem zweiten Versuch mit einer Aufschlämmung von 2% Bäckerhefe in Wasser hat sich weiter gezeigt, dass bereits eine Membrane aus Körnung F1000 in der Lage ist eine Trennschärfe von >99,5% zu erbringen. Dies zeigt, dass die erfindungsgemäß hergestellten Filtermodule eine weitaus bessere Porenstruktur besitzen, als dies bei herkömmlichen Filterelementen möglich war.

Die Fig. 2a-c) zeigen außerdem die gute Chemikalienbeständigkeit der erfindungsgemäßen Membranen, die in den Vergleichstests eine geringere Gewichtsabnahme und somit geringeren korrosiven Angriff zeigen.

Um die Porengrößenverteilung der Membranen und/oder das Gießverhalten der Schlicker gezielt zu verändern, ist es auch möglich, dass die erste Korngrößenklasse z. B. aus 40% F600 (9 µm) und 30% F1200 (3 µm) sowie die zweite Korngrößenklasse aus 20% JIS9000 (1 µm) und 10% JIS20000 besteht, wobei die kleinste Körnung der ersten Korngrößenklasse und die größten Körnung der zweiten Korngrößenklasse das für die Rekristallisation notwendige Größenverhältnis von min 2:1 aufweisen (im Beispiel 3:1).

Weitere Beispiele für erfindungsgemäß hergestellte SiC-Filtermembranen auf grobporösen SiC Trägern sind in den Figuren 3 bis 6 gezeigt. Die Fig. 2 zeigt in einem Schliffbild eine zweilagige SiC-Membran auf einem SiC Träger bei 240-facher Vergrößerung. Auf dem SiC Träger 1 sind zwei Schichten 2 (F600) und 3 (F1200) von SiC-Membranen zu erkennen, die jeweils eine sehr homogene und gleichmäßige sowie enge Korngrößen- bzw. Porengrößenverteilung aufweisen. Gleiches gilt für die zweilagige Membran (Schichten 20 und 30) auf dem SiC-Träger 10 der Fig. 3 ebenfalls bei 240-facher Vergrößerung. Die Membrane 20 wurde mit Grobkorn einer SiC Fraktion mit der Korngrößenverteilung F600 hergestellt und 90 min bei ca. 1950°C gebrannt. Die Membrane 30 wurde aus JIS6000 hergestellt und 60 min bei ca. 1800°C gebrannt.

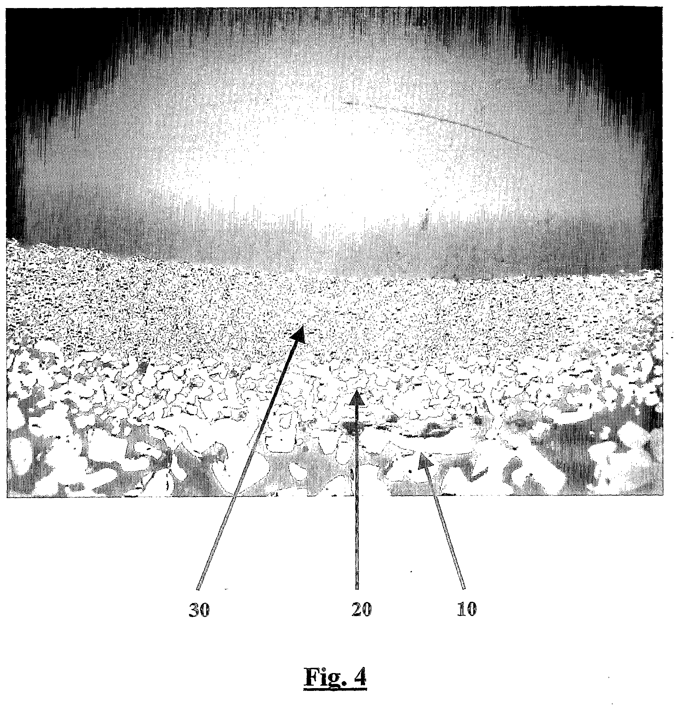

Die abgerundete Form der SiC Körner insbesondere in der Membran ist in der rasterelektronenmikroskopischen Aufnahme der Fig. 4 deutlich zu sehen, wo eine SiC-Membran 200 auf einem SiC Träger 100 dargestellt ist.

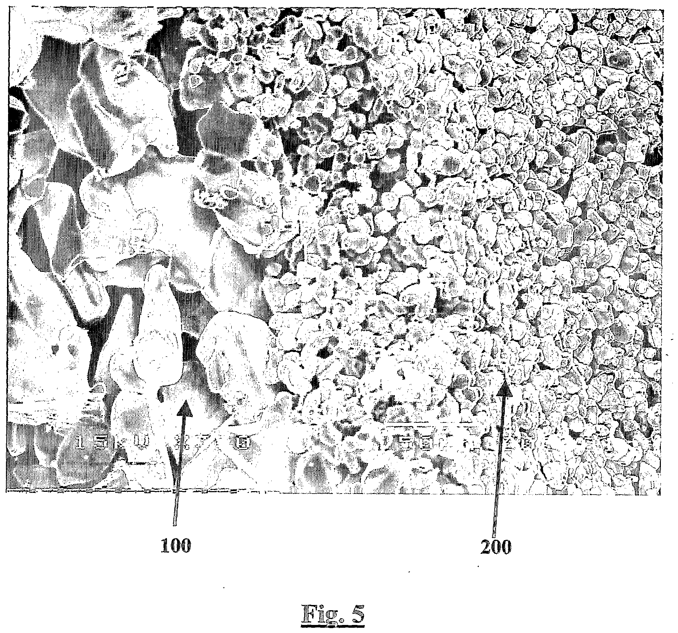

Fig. 5 zeigt am Beispiel einer zweilagigen Schicht die Auswirkungen von Unterbrand; zu Demonstrationszwecken wurde hier sowohl eine ungebrannte 1. Schicht (2000), als auch eine feinere 2. Schicht (3000) auf einem SiC-Träger (1000) einer für die zweite Schicht nicht ganz ausreichenden Temperaturbehandlung ausgesetzt. Als Ergebnis sind die ersten SiC Körner noch scharfkantig und die Zwischenräume enthalten Anteile an zweitem Korn, wobei die erste Schicht aus F600, die eine höhere Temperatur erfordert, erwartungsgemäss deutlich mehr Feinkorn enthält.

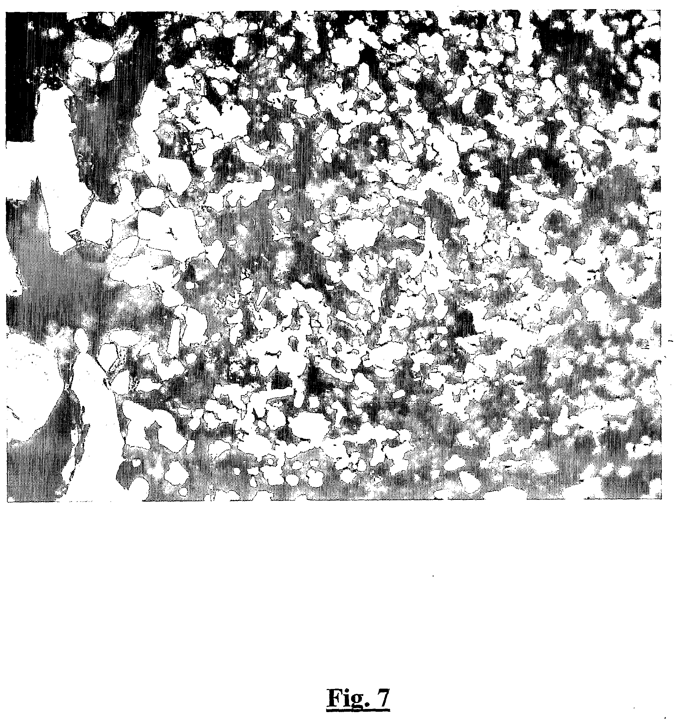

Fig. 7 zeigt im rechten Bildteil eine überbrannte 2. Schicht mit Riesenkornwachstum. Kennzeichen des Riesenkornwachstums sind das Zusammenwachsen von ersten SiC Körnern, gleichzeitig entstehen durch die volumenneutrale Materialumlagerung einzelne unerwünschte grosse Poren.

## Patentansprüche

1. Verfahren zur Herstellung eines porösen Keramikkörpers, insbesondere einer Filtermembran, welches folgende Schritte umfasst:
A) Auswählen eines ersten Keramikpulvers (Grobkorn) mit einer ersten Korngrößenklasse,
B) Auswählen eines zweiten Keramikpulvers (Feinkorn) mit einer zweiten Korngrößenklasse, welche mit Abstand kleiner als die erste Korngrößenklasse ist; wobei als Keramikkörner sowohl für das erstes als auch das zweite Keramikpulver im Wesentlichen neben unvermeidbaren Verunreinigungen ausschließlich α-SiC-Körner eingesetzt werden;
C) Mischen der beiden Keramikpulver zur Herstellung eines Pulvers mit bimodaler Korngrößenverteilung und Formen eines Formkörpers aus dem Pulvergemisch sowie
D) Erhitzen und Auslagern des Formkörpers bei einer Temperatur und für eine Zeitdauer, so dass durch Rekristallisation des Formkörpers die Körner mit der zweiten Korngröße aufgelöst werden und durch Anlagerung des Materials der zweiten Keramikkörner an die ersten Keramikkörner diese untereinander fest verbunden werden, wobei das Formen des Formkörpers als Schicht im Verfahrensschritt C) auf einem Substrat, nämlich in Porenkanälen eines porösen Keramikkörpers aus dem gleichen Material erfolgt.

2. Verfahren nach Anspruch 1, **gekennzeichnet durch** schichtweise Wiederholung der Schritte A) bis D) mit Keramikpulvern unterschiedlicher Korngrößen, insbesondere kleiner werdenden mittleren Korngrößen, so dass bei dem Keramikkörper quer zu den Schichten ein Gradient bezüglich der mittleren Korngröße eingestellt wird.

3. Verfahren nach Anspruch 1 oder 2
**dadurch gekennzeichnet, dass**
die Körner des ersten und/oder zweiten Keramikpulvers eine definierte maximale und/oder minimale Korngröße aufweisen.

4. Verfahren nach Anspruch 1, 2 oder 3
**dadurch gekennzeichnet, dass**
im Verfahrensschritt C) die Keramikpulver in einer Schlämme vorliegen und die Formgebung über Gießen erfolgt.

5. Verfahren nach einem der vorhergehenden Ansprüche
**dadurch gekennzeichnet, dass**
vor dem Verfahrensschritt D) ein Trocknungsschritt erfolgt.

6. Verfahren nach einem der vorhergehenden Ansprüche
**dadurch gekennzeichnet, dass**
das Mischungsverhältnis zwischen erstem und zweitem Keramikpulver (Grobkorn/Feinkorn) im Bereich von 6:1 bis 1:1, vorzugsweise 4:1 bis 2:1 liegt.

7. Verfahren nach einem der vorhergehenden Ansprüche
**dadurch gekennzeichnet, dass**
das Größenverhältnis zwischen der mittleren Korngröße oder der kleinsten Körnung des ersten Keramikpulvers und der mittleren Korngröße oder der größten Körnung des zweiten Keramikpulvers (Grobkorn/Feinkorn) im Bereich von 6:1 bis 2:1, vorzugsweise bei 3:1 liegt.

8. Verfahren nach einem der vorhergehenden Ansprüche
**dadurch gekennzeichnet, dass**
für die ersten und zweiten Keramikkörner Chargen mit enger Korngrößenverteilung eingesetzt werden.

9. Verfahren nach einem der vorhergehenden Ansprüche
**dadurch gekennzeichnet, dass**
sowohl für die ersten Keramikkörner Kornbänder oder Korngemische mit definierter Ober- und Unterkorngröße als auch für die zweiten Keramikkörner Kornbänder bzw. Korngemische mit definierter Oberkorngrenze eingesetzt werden, wobei das Größenverhältnis zwischen der feinsten Kornfraktion der ersten Keramikkörner und der größten Kornfraktion der zweiten Keramikkörner von mindestens 2:1 gewählt wird.

10. Verfahren nach einem der vorhergehenden Ansprüche
**dadurch gekennzeichnet, dass**
für eine erste Schicht die Korngrößen des ersten Keramikpulvers im Bereich von 6,5 µm (FE-PA 800) bis 23 µm (FEPA 360) liegen, für eine zweite Schicht im Bereich von 1,5 µm (JIS 7000) bis 6,5 µm (FEPA F800) und für eine dritte Schicht im Bereich von 0,5 µm (JIS 10000) bis 2 µm (JIS 6000) liegen , wobei als zweites Keramikpulver für die erste Schicht vorzugsweise JIS6000, für die zweite Schicht JIS9000 und für die dritte Schicht JIS20000 oder jeweils äquivalente Kornbänder eingesetzt werden.

11. Verfahren nach einem der vorhergehenden Ansprüche
**dadurch gekennzeichnet, dass**
die Temperatur und die Brenndauer im Verfahrensschritt D) so gewählt wird, dass nahezu keine Körner des zweiten Keramikpulvers im Gefüge des fertigen Keramikkörpers mehr vorhanden sind und gleichzeitig die Korngröße möglichst nahe im Bereich der Ausgangskorngröße des ersten Keramikpulvers bleibt und somit Riesenkornwachstum vermieden wird.

12. Verfahren nach einem der vorhergehenden Ansprüche
**dadurch gekennzeichnet, dass**
für das erste Keramikpulver Korngrößen im Bereich von 0,9 µm bis 17 µm und für das zweite Keramikpulver Korngrößen im Bereich von 0,2 µm bis 3 µm verwendet werden.

13. Poröser Keramikkörper, erhältlich durch einVerfahren enthaltend folgende Schritte:
A) Auswählen eines ersten Keramikpulvers (Grobkorn) mit einer ersten Korngrößenklasse,
B) Auswählen eines zweiten Keramikpulvers (Feinkorn) mit einer zweiten Korngrößenklasse, welche mit Abstand kleiner als die erste Korngrößenklasse ist; wobei als Keramikkörner sowohl für das erstes als auch das zweite Keramikpulver im Wesentlichen neben unvermeidbaren Verunreinigungen ausschließlich α-SiC-Körner eingesetzt werden;
C) Mischen der beiden Keramikpulver zur Herstellung eines Pulvers mit bimodaler Korngrößenverteilung und Formen eines Formkörpers aus dem Pulvergemisch sowie
D) Erhitzen und Auslagern des Formkörpers bei einer Temperatur und für eine Zeitdauer, so dass durch Rekristallisation des Formkörpers die Körner mit der zweiten Korngröße aufgelöst werden und durch Anlagerung des Materials der zweiten Keramikkörner an die ersten Keramikkörner diese untereinander fest verbunden werden, wobei das Formen des Formkörpers als Schicht im Verfahrensschritt C) auf einem Substrat, nämlich in Porenkanälen eines porösen Keramikkörpers aus dem gleichen Material erfolgt.

14. Keramikkörper nach der Anspruch 13
**dadurch gekennzeichnet, dass**
die Keramikkörner vollständig in kristalliner Form vorliegen.

15. Keramikkörper nach einem der Ansprüche 13 oder 14
**dadurch gekennzeichnet, dass**
der Keramikkörper frei von Schmelzphase ist.

16. Keramikkörper nach einem der Ansprüche 13 bis 15
**dadurch gekennzeichnet, dass**
er eine ausreichende Festigkeit zum Einsatz als Filtermembran, insbesondere in einem Cross-flow Membranfilter aufweist.

17. Verwendung eines porösen Keramikkörpers nach einem der Ansprüche 13 bis 16 als Filter, der weiterhin eine Schicht aus poröser Oxidkeramik, insbesondere für die Nano-Filtration umfasst.

## Claims

1. Method for the production of a porous ceramic body, especially of a filter membrane, comprising the following steps:
A) Selection of a first ceramic powder (coarse grain) with a first grain size class,
B) Selection of a second ceramic powder (fine grain) with a second grain size class, which is far smaller than the first grain size class; wherein
α-SiC grains are essentially exclusively used, aside from unavoidable contaminants, as ceramic grains for both the first as well as the second ceramic powder;
C) Mixing of the two ceramic powders to produce a powder with a bimodal grain size distribution and shaping of a molded body from the powder mixture as well as
D) Heating and conditioning of the molded body at a temperature and for a period of time such that, through recrystallization of the molded body, the grains with the second grain size are dissolved and, through attachment of the material of the second ceramic grains to the first ceramic grains, these arc firmly linked to each other, wherein the shaping of the molded body as a layer takes place in the method step C) on a substrate, namely in pore channels of a porous ceramic body out of the same material.

2. Method of claim 1, **characterized by** repeating layer by layer steps A) to D) with ceramic powders having different grain sizes, in particular mean grain sizes becoming smaller, so that a gradient with respect to the mean grain size is set with the ceramic body transverse to the layers.

3. Method of claim 1 or 2
**characterized by the fact that**
the grains of the first and/or second ceramic powders have a defined maximum and/or minimum grain size.

4. Method of claim 1 or 2
**characterized by the fact that**
in method step C), the ceramic powders are present in a slurry and shaping is effected by casting.

5. Method of any of the previous claims
**characterized by the fact that**
prior to method step D), a drying step occurs.

6. Method of any of the previous claims
**characterized by the fact that**
the mixing ratio between the first and second ceramic powder (coarse grain/fine grain) lies in the range 6:1 to 1:1, preferably 4:1 to 2:1.

7. Method of any of the previous claims
**characterized by the fact that**
the size ratio between the mean grain size or of the smallest grains of the first ceramic powder and the mean grain size of the largest grains of the second ceramic powder (coarse grain/fine grain) lies in the range 6:1 to 2:1, preferably 3:1.

8. Method of any of the previous claims
**characterized by the fact that**
batches of narrow grain size distribution are used for the first and second ceramic grains.

9. Method of any of the previous claims
**characterized by the fact that**
grain bands or grain mixtures having defined upper and lower grain size are used not only for the first ceramic grains, but also grain bands or grain mixtures having a defined upper grain limit are used for the second ceramic grains, with the size ratio between the finest grain fraction of the first ceramic grains and the largest grain fraction of the second ceramic grains chosen to be at least 2:1.

10. Method of any of the previous claims
**characterized by the fact that**
for a first layer, the grain sizes of the first ceramic powder are in the range 6.5 µm (FEPA 800) to 23 µm (FEPA 360), for a second layer in the range 1.5 µm (JIS 7000) to 6.5 µm (FEPA F800) and for a third layer in the range 0.5 µm (JIS 10000) to 2 µm (JIS 6000), with preferably JIS 6000 being used as the second ceramic powder for the first layer, JIS 9000 for the second layer, and JIS 20000 for the third layer, or in each case equivalent grain bands.

11. Method of any of the previous claims
**characterized by the fact that**
the temperature and firing duration in method step D) is chosen such that hardly any grains of the second ceramic powder are present any longer in the microstructure of the finished ceramic body and at the same time the grain size remains as close as possible in the region of the initial grain size of the first ceramic powder and thereby giant grain growth is avoided.

12. Method according to one of the preceding claims,
**characterized by the fact that**
for the first ceramic powder, grain sizes in the range from 0.9 µm to 17 µm and for the second ceramic power in the range from 0.2 µm to 3 µm are used.

13. Porous ceramic body, obtainable through a method comprising the following steps:
A) Selection of a first ceramic powder (coarse grain) with a first grain size class,
B) Selection of a second ceramic powder (fine grain) with a second grain size class, which is far smaller than the first grain size class; wherein
α-SiC grains are essentially exclusively used, aside from unavoidable contaminants, as ceramic grains for both the first as well as the second ceramic powder;
C) Mixing of the two ceramic powders to produce a powder with a bimodal grain size distribution and shaping of a molded body from the powder mixture as well as
D) Heating and conditioning of the molded body at a temperature and for a period of time such that, through recrystallization of the molded body, the grains with the second grain size are dissolved and, through attachment of the material of the second ceramic grains to the first ceramic grains, these are firmly linked to each other, wherein the shaping of the molded body as a layer takes place in the method step C) on a substrate, namely in pore channels of a porous ceramic body out of the same material.

14. Method of claim 13
**characterized by the fact that**
the ceramic grains are present in completely crystalline form

15. Method of any of claims 13 or 14
**characterized by the fact that**
the ceramic body is free of melt phase.

16. Ceramic body of any of claims 13 to 15
**characterized by the fact that**
it has sufficient strength for use as filter membrane, especially in a cross-flow membrane filter.

17. Use of a porous ceramic body according to any of claims 13 to 16 as a filter, further comprising a layer out of a porous oxide ceramic, particularly for nano filtration.

## Revendications

1. Procédé destiné à la fabrication d'un corps en céramique poreux, en particulier d'une membrane de filtration, lequel procédé comprend les étapes suivantes :
A) la sélection d'une première poudre de céramique (à gros grains) avec une première classe granulométrique ;
B) la sélection d'une deuxième poudre de céramique (à grains fins) avec une deuxième classe granulométrique, laquelle est, de loin, inférieure à la première classe granulométrique, selon laquelle
outre les impuretés inévitables, seuls des grains en carbure de silicium de type α (grains SiC α) sont utilisés, pour l'essentiel, comme grains de céramique, aussi bien pour la première poudre de céramique que pour la deuxième poudre de céramique ;
C) le mélange des deux poudres de céramique destinées à la fabrication d'une poudre avec une distribution granulométrique bimodale ; ainsi que le moulage d'un corps moulé issu du mélange de poudres ; ainsi que
D) le chauffage et la précipitation du corps moulé à une telle température et pendant telle une période de temps que les grains avec la deuxième taille de grains sont dissous par la recristallisation du corps moulé et ces grains de céramique sont solidairement reliés les uns aux autres par l'accumulation du matériau des deuxièmes grains de céramique avec les premiers grains de céramique, selon lequel le moulage du corps moulé est réalisé à partir du même matériau, sous la forme d'une couche, dans l'étape de procédé C), sur un substrat, à savoir dans des canaux de pores d'un corps poreux en céramique.

2. Procédé selon la revendication 1, **caractérisé par** la répétition en couches successives des phases A) à D) avec des poudres de céramique ayant des tailles de grains différentes, en particulier des tailles de grains moyennes devenant plus petites, de telle sorte que, pour le corps en céramique se trouvant à la transversale par rapport aux couches, un gradient est programmé en ce qui concerne la taille moyenne de grains.

3. Procédé selon la revendication 1 ou 2,
**caractérisé en ce que**
les grains de la première poudre de céramique et/ou de la deuxième poudre de céramique présentent une taille définie de grains maximale et/ou minimale.

4. Procédé selon la revendication 1, 2 ou 3,
**caractérisé en ce que**
dans l'étape de procédé C), les poudres de céramique se trouvent dans une suspension et la détermination de la forme est réalisée par l'intermédiaire d'un processus de coulée.

5. Procédé selon l'une des revendications précédentes,
**caractérisé en ce que**
une étape de séchage est réalisée avant l'étape de procédé D).

6. Procédé selon l'une des revendications précédentes,
**caractérisé en ce que**
la proportion de mélange entre la première poudre de céramique et la deuxième poudre de céramique (à gros grains / à grains fins) se situe dans une zone comprise entre 6:1 et 1:1, de préférence dans une zone comprise entre 4:1 et 2:1.

7. Procédé selon l'une des revendications précédentes,
**caractérisé en ce que**
le rapport de taille entre la taille moyenne des grains ou entre la plus petite dimension des grains de la première poudre de céramique et la taille moyenne des grains ou la plus grande dimension des grains de la deuxième poudre de céramique (à gros grains / à grains fins) se situe dans une zone comprise entre 6:1 et 2:1, de préférence dans une proportion de 3:1.

8. Procédé selon l'une des revendications précédentes,
**caractérisé en ce que**
des charges présentant une distribution granulométrique étroite sont utilisées pour les premiers et pour les deuxièmes grains de céramique.

9. Procédé selon l'une des revendications précédentes,
**caractérisé en ce que**
sont utilisé(e)s aussi bien des bandes granulométriques ou des mélanges de grains avec une granulométrie définie de tamisat inférieur et supérieur, pour les premiers grains de céramique, que des bandes granulométriques, respectivement des mélanges de grains avec une limite supérieure et définie de granulométrie pour les deuxièmes grains de céramique, selon lequel le rapport sélectionné de la taille entre la fraction granulométrique la plus fine des premiers grains de céramique et la fraction granulométrique la plus grosse des deuxièmes grains de céramique se situe dans une proportion d'au moins 2:1.

10. Procédé selon l'une des revendications précédentes,
**caractérisé en ce que**
les tailles des grains de la première poudre de céramique se situent dans une zone comprise entre 6,5 µm (norme FEPA 800) et 23 µm (norme FEPA 360) pour une première couche, se situent dans une zone comprise entre 1,5 µm (norme JIS 7000) et 6,5 µm norme FEPA F800) pour une deuxième couche et se situent dans une zone comprise entre 0,5 µm (norme JIS 10000) et 2 µm (norme JIS 6000) pour une troisième couche, selon lequel, de préférence, la norme JIS6000 est utilisée sous la forme de deuxième poudre de céramique pour la première couche, de préférence, la norme JIS9000 est utilisée pour la deuxième couche et la norme JIS20000 ou des bandes granulométriques respectivement équivalentes sont utilisées pour la troisième couche.

11. Procédé selon l'une des revendications précédentes,
**caractérisé en ce que**
la température et la durée de combustion dans l'étape de procédé D) sont sélectionnées de telle sorte que presque plus aucun grain de la deuxième poudre de céramique n'est présent dans la structure du corps en céramique fini et, dans le même temps, la taille de grains reste le plus près possible dans la zone de la granulométrie de sortie de la première poudre de céramique et une croissance de grains géants est par conséquent évitée.

12. Procédé selon l'une des revendications précédentes,
**caractérisé en ce que**
les tailles de grains employées pour la première poudre de céramique se situent dans une zone comprise entre 0,9 µm et 17 µm et les tailles de grains employées pour la deuxième poudre de céramique se situent dans une zone comprise entre 0,2 µm et 3 µm.

13. Corps en céramique poreux, obtenu par l'intermédiaire d'un procédé comprenant les étapes suivantes :
A) la sélection d'une première poudre de céramique (à gros grains) avec une première classe granulométrique ;
B) la sélection d'une deuxième poudre de céramique (à grains fins) avec une deuxième classe granulométrique, laquelle est, de loin, inférieure à la première classe granulométrique, selon laquelle
outre les impuretés inévitables, seuls des grains en carbure de silicium de type α (grains SiC α) sont, pour l'essentiel, utilisés comme grains de céramique, aussi bien pour la première que pour la deuxième poudre de céramique ;
C) le mélange des deux poudres de céramique destinées à la fabrication d'une poudre avec une distribution granulométrique bimodale ; ainsi que le moulage d'un corps moulé issu du mélange de poudres ; ainsi que
D) le chauffage et la précipitation du corps moulé à une température et pendant une période de temps, tels, que les grains avec la deuxième taille de grains sont dissouts par la recristallisation du corps moulé et ces grains de céramique sont solidairement reliés les uns aux autres par l'accumulation du matériau des deuxièmes grains de céramique avec les premiers grains de céramique, selon lesquels le moulage du corps moulé est réalisé à partir du même matériau, sous la forme d'une couche, dans l'étape de procédé C), sur un substrat, à savoir dans des canaux de pores d'un corps poreux en céramique.

14. Corps en céramique selon la revendication 13,
**caractérisé en ce que**
les grains de céramique se présentent en intégralité sous une forme cristalline.

15. Corps en céramique selon l'une des revendications 13 ou 14,
**caractérisé en ce que**
le corps en céramique est dépourvu d'une étape de fusion.

16. Corps en céramique selon l'une des revendications 13 à 15
**caractérisé en ce que**
ledit corps en céramique présente une résistance suffisante en vue d'une utilisation sous la forme d'une membrane de filtration, en particulier dans un filtre à diaphragme pour filtration transversale.

17. Utilisation d'un corps en céramique poreux selon l'une des revendications 13 à 16 sous la forme d'un filtre, lequel comprend en outre une couche en céramique oxydée poreuse, en particulier pour la nanofiltration.
